# EUROPÄISCHE PATENTANMELDUNG

(11) **EP 2 159 011 A1**
(43) Veröffentlichungstag der Anmeldung: **03.03.2010**
(21) Anmeldenummer: 09009701.5
(22) Anmeldetag: 28.07.2009
(51) Int. Cl.: B25H 1/06, B25H 1/10, B23D 47/02

(54) **Klemmgriff für ein Trägersystem**

(30) Priorität: 28.08.2008 DE 202008011457 U
(71) Anmelder: Metabowerke GmbH, 72622 Nürtingen (DE)
(72) Erfinder: Evers, Jürgen, 48480 Spelle (DE)
(74) Vertreter: Gesthuysen, von Rohr & Eggert

(57) **Zusammenfassung**

Gegenstand der Erfindung ist ein Klemmgriff für ein Trägersystem, insbesondere für einen Maschinenständer, mit einem langgestreckten, im angebauten Zustand einen Tragkörper (1) des Trägersystems überfassenden, im wesentlichen biegesteifen Grundprofil (5) und am Grundprofil (5) mindestens einer im wesentlichen biegesteifen feststehenden Klemmbacke (6) und mindestens einer dagegen verstellbaren Klemmbacke (7). Dieser zeichnet sich erfindungsgemäß dadurch aus, daß die verstellbare Klemmbacke (7) mit dem Grundprofil (5) einstückig ausgeführt ist, daß die verstellbare Klemmbacke (7) in sich biegesteif ausgeführt ist und daß zwischen der verstellbaren Klemmbacke (7) und dem Grundprofil (5) eine Sollbiegestelle (8) ausgebildet ist, wobei die verstellbare Klemmbacke (7) durch ein zusätzliches Federelement oder, vorzugsweise, durch die Eigenelastizität der Sollbiegestelle (8) in eine Sollposition federvorgespannt ist.

## Beschreibung

Die Erfindung betrifft einen Klemmgriff für ein Trägersystem, insbesondere für einen Maschinenständer, mit den Merkmalen des Oberbegriffs von Anspruch 1.

Klemmgriffe der in Rede stehenden Art dienen an einem Trägersystem dazu, ein Anbauteil schnell und wirksam an einem Tragkörper des Trägersystems zu befestigen. Trägersysteme der in Rede stehenden Art sind für verschiedene Anwendungsfälle bekannt. Ein besonders bevorzugtes Beispiel eines solchen Trägersystems ist ein Maschinenständer.

Bekannt ist ein bereits sehr komfortabler Maschinenständer, der der sicheren Anordnung und Halterung einer Kapp- und Gehrungssäge auf einer Plattform dient, die ihrerseits mittels einer Klemmechanik mit zwei Klemmgriffen auf einem langgestreckten Tragkörper des Maschinenständers befestigt ist (DE-U-20 2006 009 307).

Bei dem bekannten Trägersystem ist der Tragkörper als verwindungssteifes Rückgrat des Maschinenständers einstückig als Doppelrohrprofil mit zwei mit seitlichem Abstand voneinander parallel zueinander verlaufenden Profilrohren und zwei die Profilrohre verbindenden Materialstegen ausgeführt. An den Profilrohren sind Formschlußmittel derart ausgebildet, daß sich ein nicht runder Innenquerschnitt der Profilrohre ergibt. Tatsächlich sind die Formschlußmittel als sich nach innen in die Profilrohre hinein erstreckende Längsnuten gestaltet.

Jeder der beiden Klemmgriffe der Klemmechanik an der Unterseite der Kapp- und Gehrungssäge, die hier das Anbauteil des Trägersystems ist, hat ein im wesentlichen biegesteifes Grundprofil und am Grundprofil eine im wesentlichen biegesteife feststehende Klemmbacke sowie eine gegenüber dieser feststehenden Klemmbacke verstellbare Klemmbacke.

Bei dem bekannten, zuvor erläuterten Stand der Technik sind das Grundprofil und die feststehende Klemmbacke einstückig als Metall-Hohlprofil ausgeführt. In diesem Metall-Hohlprofl ist die verstellbare Klemmbacke um eine horizontale Achse schwenkbar gelagert. Sie ist in einem bevorzugten Ausführungsbeispiel mittels einer im Grundprofil gelagerten Gewindestange verstellbar. Dazu dient ein am Grundprofil gelagerter Handhebel, der federvorgespannt ist.

Weitere Konstruktionen des Standes der Technik zu Maschinenständern haben ebenfalls stets eigenständig ausgebildete, am Grundprofil verstellbar gelagerte Klemmbacken (EP-A-1 275 476; US-A-5,592,981; US-B-6,415,831; US-A-5,836,365).

Der Lehre der Erfindung liegt das Problem zugrunde, den bekannten Klemmgriff für ein Trägersystem zu vereinfachen.

Die zuvor aufgezeigte Problemstellung ist bei einem Klemmgriff mit den Merkmalen des Oberbegriffs von Anspruch 1 durch die Merkmale des kennzeichnenden Teils von Anspruch 1 gelöst. Bevorzugte Ausgestaltungen und Weiterbildungen sind Gegenstand der Unteransprüche.

Erfindungsgemäß ist die verstellbare Klemmbacke mit dem Grundprofil einstükkig ausgeführt. Die Verstellfunktion der verstellbaren Klemmbacke wird in ein in das Material der Klemmechanik integriertes Gelenk verlagert. Dazu ist an der entsprechenden Stelle eine Sollbiegestelle ausgebildet. Entweder durch ein zusätzlich angebrachtes Federelement oder, vorzugsweise, durch die Eigenelastizität des Materials in der Sollbiegestelle wird die verstellbare Klemmbacke in ihre Sollposition, in der die Klemmung erfolgt, vorgespannt.

Der komplette Klemmgriff kann erfindungsgemäß als ein Teil hergestellt werden, insbesondere aus einem Kunststoffmaterial, beispielsweise aus faserverstärktem Polycarbonat.

Um die gesamte Anordnung gut bedienen zu können ist vorgesehen, daß an der verstellbaren Klemmbacke einstückig ein langgestreckter Handhebel ausgebildet ist. Insbesondere ist es zweckmäßig, wenn die Klemmbacke im den Handhebel bildenden Bereich besonders leicht und materialsparend ausgeführt, beispielsweise innen hohl ausgebildet ist.

Nach weiter bevorzugter Lehre der Erfindung ist das Grundprofil des Klemmgriffs relativ breit und flach ausgebildet. Damit ergibt sich eine breite Klemmfläche am Tragkörper. Zur Versteifung des Grundprofils befindet sich auf dessen im angebauten Zustand vom Tragkörper abgewandten Seite eine langgestreckte, deutlich schmalere Verstärkungsleiste o. dgl.. Dadurch hat das Grundprofil über die Länge eine hohe Biegesteifigkeit, gleichzeitig ergibt sich eine optimale Auslegung der Sollbiegestelle und der Klemmflächen am Tragkörper des Trägersystems.

Gegenstand der Erfindung ist auch ein komplettes Anbauteil für ein Trägersystem, beispielsweise ein Maschinenhalter für einen Maschinenständer, bei dem die Klemmechanik zum Anbringen am Tragkörper des Trägersystems mindestens einen Klemmgriff gemäß der Erfindung aufweist.

Im folgenden wird die Erfindung nun anhand einer lediglich ein bevorzugtes Ausführungsbeispiel darstellenden Zeichnung näher erläutert. In der Zeichnung zeigt
- Fig. 1: in perspektivischer Ansicht einen Maschinenständer als Beispiel eines Trägersystems, jedoch ohne dort aufgebaute Werkzeugmaschine,
- Fig. 2: einen Abschnitt des Tragkörpers des Maschinenständers aus Fig. 1 mit einem daran angebrachten erfindungsgemäßen Klemmgriff und
- Fig. 3: einen Querschnitt in der Mittelebene des Klemmgriffs gemäß Fig. 2.

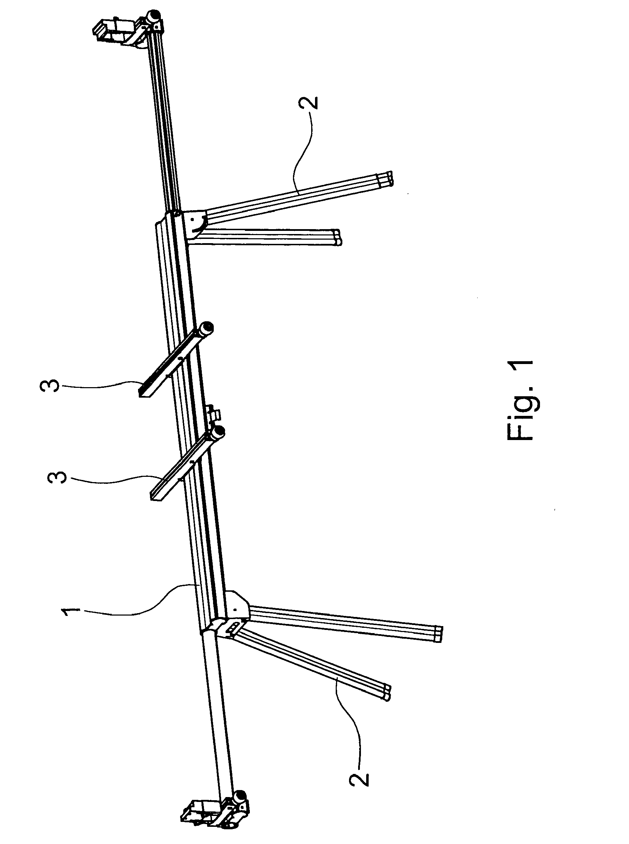

Der in Fig. 1 in seiner Gesamtheit dargestellte Maschinenständer weist als strukturgebendes Rückgrat einen langgestreckten Tragkörper 1 auf. Endseitig am Tragkörper 1 sind Standbeine 2 angeordnet. Der Tragkörper 1 ist derart mit in Längsrichtung verlaufenden Formschlußmitteln gestaltet, daß an ihm Klemmgriffe 3 für ein Trägersystem anbringbar sind. Dargestellt sind hier zwei Klemmgriffe 3. Diese können am Tragkörper 1 in Längsrichtung verstellt werden. Auf diesen beiden Klemmgriffen 3 kann dann beispielsweise eine Tragplatte einer Kapp- und Gehrungssäge oder auch eine Kapp- und Gehrungssäge unmittelbar angebracht werden.

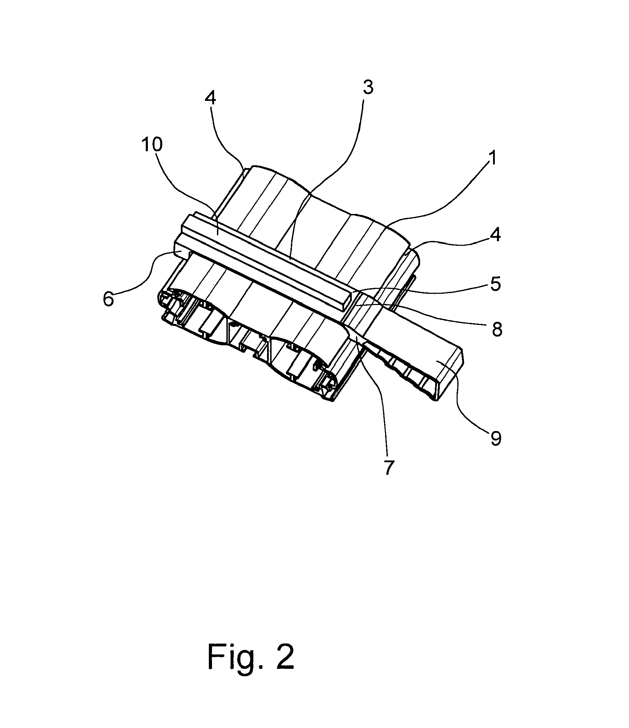

Fig. 2 zeigt zunächst perspektivisch einen Abschnitt des Tragkörpers 1, der hier einstückig als Doppelrohrprofil mit zwei mit seitlichem Abstand voneinander parallel zueinander verlaufenden Profilrohren und zwei die Profilrohre verbindenden Mittelstegen ausgeführt ist. Rechts und links am Tragkörper 1 erkennt man die als Längsnuten ausgeführten Formschlußmittel 4. Angebaut am Tragkörper 1 ist hier der erfindungsgemäße Klemmgriff 3.

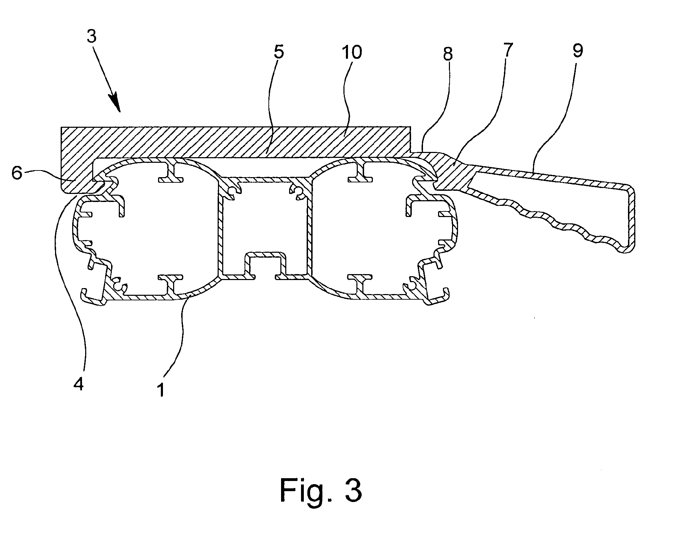

Fig. 2 und Fig. 3 zeigen im Zusammenhang, daß der Klemmgriff 3 ein langgestrecktes, im angebauten Zustand den Tragkörper 1 des Trägersystems überfassendes, im wesentlichen biegesteifes Grundprofil 5 und am Grundprofil 5 eine im wesentlichen biegesteife, feststehende Klemmbacke 6 und eine dagegen verstellbare Klemmbacke 7 aufweist.

Grundsätzlich ist es nicht ausgeschlossen, daß nicht nur eine feststehende Klemmbacke 6 und eine verstellbare Klemmbacke 7 vorhanden ist, sondern daß beispielsweise zwei nebeneinander angeordnete feststehende Klemmbacken 6 und ebenso zwei nebeneinander angeordnete verstellbare Klemmbacken 7 an ein und demselben Grundprofil 5 vorgesehen sind. Das mag bei einzelnen Konstruktionen vorteilhaft sein. Dargestellt ist allerdings die normale Ausführung mit einer feststehenden Klemmbacke 6 und einer verstellbaren Klemmbacke 7 am Grundprofil 5.

Grundsätzlich ist es auch möglich, daß am Grundprofil 5 anstelle der feststehenden Klemmbacke eine zweite verstellbare Klemmbacke angebracht ist. Dann wäre der Klemmgriff von beiden Seiten betätigbar.

Aus Fig. 2 und Fig. 3 ergibt sich, daß die verstellbare Klemmbacke 7 mit dem Grundprofil 5 einstückig ausgeführt ist, daß die verstellbare Klemmbacke 7 in sich biegesteif ausgeführt ist und daß zwischen der verstellbaren Klemmbacke 7 und dem Grundprofil 5 eine Sollbiegestelle 8 ausgebildet ist, wobei die verstellbare Klemmbacke 7 durch ein zusätzliches Federelement oder, vorzugsweise, durch die Eigenelastizität der Sollbiegestelle 8 in eine Sollposition federvorgespannt ist. Das dargestellte und bevorzugte Ausführungsbeispiel zeigt die bevorzugte Ausführung der verstellbaren Klemmbacke 7 mit integriertem, durch das Material im Bereich der Sollbiegestelle 8 selbst gebildetem Federelement, das die Federvorspannung der verstellbaren Klemmbacke 7 gegenüber dem Grundprofil 5 bzw. dem Tragkörper 1 generiert.

Im dargestellten und bevorzugten Ausführungsbeispiel ist vorgesehen, daß auch die feststehende Klemmbacke 6 mit dem Grundprofil 5 einstückig ausgeführt ist.

Erfindungsgemäß ist vorgesehen, daß das Grundprofil 5 mit der Klemmbacke 7 bzw. mit den Klemmbacken 6, 7 aus an der Sollbiegestelle 8 biegeelastisch ausgebildetem Kunststoffmaterial besteht. Besonders zweckmäßig ist es dabei, wenn das Grundprofil 5 mit den Klemmbacken 6, 7 einstückig als Kunststoff-Spritzgußteil ausgeführt ist.

Wie bereits zuvor angesprochen worden ist, ist ein faserverstärktes Polycarbonat vermutlich ein zweckmäßiges und passendes Kunststoffmaterial.

Das in Fig. 2 und 3 dargestellte Ausführungsbeispiel zeigt ferner, daß an der verstellbaren Klemmbacke 7 einstückig ein langgestreckter Handhebel 9 ausgebildet ist. Dabei ist gemäß bevorzugter Lehre vorgesehen, daß die verstellbare Klemmbacke 7 im den Handhebel 9 bildenden Bereich innen hohl ausgebildet ist. Man sieht das besonders gut in der Schnittdarstellung von Fig. 3.

In Fig. 2 läßt sich eine Besonderheit der Konstruktion des Grundprofils 5 des erfindungsgemäßen Klemmgriffes gut erkennen. Hier ist nämlich vorgesehen, daß das Grundprofil 5 und die Klemmbacken 6, 7 eine bestimmte, im wesentlichen übereinstimmende Breite aufweisen und daß am Grundprofil 5 auf seiner im angebauten Zustand am Tragkörper 1 abgewandten Seite eine langgestreckte, schmalere Verstärkungsleiste 10 ausgebildet ist. Die Verstärkungsleiste 10 reicht im dargestellten Ausführungsbeispiel bis in den Bereich der feststehenden Klemmbacke 6 hinein und trägt auch dort zur hohen Biegesteifigkeit der feststehenden Klemmbacke 6 bei. Demgegenüber endet die Verstärkungsleiste 10 rechts vor der Sollbiegestelle 8, die so als relativ breites, federvorgespanntes Filmscharnier im Kunststoffmaterial des Klemmgriffes 3 wirkt.

Gegenstand der Erfindung ist auch ein komplettes Anbauteil für ein Trägersystem, insbesondere ein Maschinenhalter für einen Maschinenständer der in Rede stehenden Art, bei dem die Klemmechanik zum Anbringen am Tragkörper 1 des Trägersystems mindestens einen Klemmgriff 3 der im einzelnen zuvor erläuterten Konstruktion aufweist. Fig. 1 kann man entnehmen, daß bevorzugt zwei voneinander beabstandete Klemmgriffe 3 dieser Art vorgesehen sind.

## Patentansprüche

1. Klemmgriff für ein Trägersystem, insbesondere für einen Maschinenständer, mit einem langgestreckten, im angebauten Zustand einen Tragkörper (1) des Trägersystems überfassenden, im wesentlichen biegesteifen Grundprofil (5) und am Grundprofil (5) mindestens einer im wesentlichen biegesteifen feststehenden Klemmbacke (6) und mindestens einer dagegen verstellbaren Klemmbacke (7),
**dadurch gekennzeichnet,**
**daß** die verstellbare Klemmbacke (7) mit dem Grundprofil (5) einstückig ausgeführt ist,
**daß** die verstellbare Klemmbacke (7) in sich biegesteif ausgeführt ist und
**daß** zwischen der verstellbaren Klemmbacke (7) und dem Grundprofil (5) eine Sollbiegestelle (8) ausgebildet ist,
wobei die verstellbare Klemmbacke (7) durch ein zusätzliches Federelement oder, vorzugsweise, durch die Eigenelastizität der Sollbiegestelle (8) in eine Sollposition federvorgespannt ist.

2. Klemmgriff nach Anspruch 1, **dadurch gekennzeichnet,**
**daß** auch die feststehende Klemmbacke (6) mit dem Grundprofil (5) einstückig ausgeführt ist.

3. Klemmgriff nach Anspruch 1 oder 2, **dadurch gekennzeichnet,**
**daß** das Grundprofil (5) mit der Klemmbacke (7) bzw. mit den Klemmbacken (6, 7) aus an der Sollbiegestelle (8) biegeelastisch ausgebildetem Kunststoffmaterial besteht.

4. Klemmgriff nach Anspruch 3, **dadurch gekennzeichnet,**
**daß** das Grundprofil (5) mit den Klemmbacken (6, 7) einstückig als KunststoffSpritzgußteil ausgeführt ist.

5. Klemmgriff nach einem der Ansprüche 1 bis 4, **dadurch gekennzeichnet,**
**daß** an der verstellbaren Klemmbacke (7) einstückig ein langgestreckter Handhebel (9) ausgebildet ist.

6. Klemmgriff nach Anspruch 5, **dadurch gekennzeichnet,**
**daß** die verstellbare Klemmbacke (7) im den Handhebel (9) bildenden Bereich innen hohl ausgebildet ist.

7. Klemmgriff nach einem der Ansprüche 1 bis 6, **dadurch gekennzeichnet,**
**daß** das Grundprofil (5) und die Klemmbacken (6, 7) eine bestimmte, im wesentlichen übereinstimmende Breite aufweisen und daß am Grundprofil (5) auf seiner im angebauten Zustand vom Tragkörper (1) abgewandten Seite eine langgestreckte, schmalere Verstärkungsleiste (10) ausgebildet ist.

8. Klemmgriff nach einem der Ansprüche 1 bis 7, **dadurch gekennzeichnet,**
**daß** anstelle der feststehenden Klemmbacke am Grundprofil eine weitere verstellbare Klemmbacke vorgesehen ist.

9. Anbauteil für ein Trägersystem, insbesondere Maschinenhalter für einen Maschinenständer,
mit einer Klemmechanik zum Anbringen an einem Trägkörper (1) des Trägersystems,
**dadurch gekennzeichnet,**
**daß** die Klemmechanik mindestens einen Klemmgriff (3) nach einem der Ansprüche 1 bis 8 aufweist.
